# FASCICULE DE BREVET EUROPEEN

(11) **EP 2 671 805 B1**
(45) Date de publication et mention de la délivrance du brevet: **12.02.2020**
(21) Numéro de dépôt: 13171081.6
(22) Date de dépôt: 07.06.2013
(51) Int. Cl.: B64G 1/10, B64G 4/00

(54) **PROCÉDÉ ET DISPOSITIF DE CAPTURE ET DE COUPLAGE EN VUE DE LA DÉSORBITATION OU RÉORBITATION D'UN OBJET DANS L'ESPACE**
Verfahren und Vorrichtung zur Erfassung und Kopplung angesichts einer Abweichung von der Umlaufbahn oder einer Rückführung auf die Umlaufbahn eines Objekts im Weltraum
Method and device for capturing and coupling with a view to the de-orbiting or re-orbiting of an object in space

(30) Priorité: 08.06.2012 FR 1255397
(43) Date de publication de la demande: 11.12.2013
(73) Titulaire: CT Ingenierie, 31770 Colomiers (FR)
(72) Inventeur: Dupont, Cédric, 92160 Antony (FR); Trouchet, Daniel, 75015 Paris (FR); Lequette, Laurent, 78240 Chambourcy (FR)
(74) Mandataire: Decobert, Jean-Pascal

(56) Documents cités:
- US-A1- 2005 103 939
- US-A1- 2010 193 640
- US-A1- 2012 097 799
- Rob Hoyt: "Space Debris Mitigation Technologies", Tethers Unlimited, Inc. , 17 mai 2011 (2011-05-17), XP002694657, Extrait de l'Internet: URL:http://web.archive.org/web/20110517204 903/http://www.tethers.com/papers/DeorbitT echnologies.pdf [extrait le 2013-03-27]
- Tethers Unlimited, Inc.: "The Grapple, Retrieve, And Secure Payload (GRASP) Experiment", , 17 mai 2011 (2011-05-17), XP002694658, Extrait de l'Internet: URL:http://web.archive.org/web/20110517202 558/http://www.tethers.com/GRASP.html [extrait le 2013-03-28]
- TAKAHASHI K ET AL: "SIMULATION FOR DEPLOYMENT OF AN INFLATABLE DISK IN ORBIT", JOURNAL OF SPACECRAFT AND ROCKETS, AMERICAN INSTITUTE OF AERONAUTICS AND ASTRONAUTICS,REASTON,VA, US, vol. 37, no. 5, 30 septembre 2000 (2000-09-30), page 707/708, XP000967653, ISSN: 0022-4650

## Description

La présente invention concerne un procédé et un dispositif de capture et de couplage en vue de la désorbitation ou de la réorbitation d'un objet dans l'espace, cet objet étant par exemple un débris orbital.

Les objets artificiels tels que les satellites ou les étages supérieurs des lanceurs sont la principale source de débris orbitaux. La plus forte concentration de ces débris se retrouve en orbite basse terrestre (LEO) ou en orbite héliosynchrone (SSO). Si la plupart d'entre eux se désintégreront naturellement à terme en brûlant par pénétration dans l'atmosphère, ils constituent en attendant un danger pour les satellites voire pour les systèmes de lancement.

Selon la loi française n° 2008-518 du 3 juin 2008 relative aux opérations spatiales, une fois sa mission terminée, il existe trois moyens de libérer un satellite ou un étage supérieur de lanceur de son orbite : désorbitation directe de l'objet (rentrée atmosphérique contrôlée), transfert (désorbitation) de l'objet sur une orbite qui lui permettra de rentrer naturellement sur la Terre en moins de 25 ans, et transfert (réorbitation) de l'objet vers des orbites dites cimetières, qui se situent au-delà de 2000km en orbite basse.

La problématique de traitement des débris spatiaux est apparue en 1978, suite à la publication d'un article de Kessler et Cour-Palais (Donald J. Kessler, Burton G. Cour-Palais, Collision Frequency of Artificial Satellites: The Création of a Débris Belt, Journal of Geophysical Research, Vol. 83, No. A6, PP. 2637-2646, 1978), qui prévoyait des premières collisions autour de l'an 2000, provoquant une augmentation exponentielle du flux de débris qui engendrerait des risques plus importants pour les satellites.

La NASA a effectué ces dernières années plusieurs simulations (NASA Orbital Débris Quaterly News, Volume 12, Issue 4, October 2008) afin de prévoir comment cette population d'objets se comporterait dans le futur. Ces calculs montrent que, si rien n'est fait, le nombre d'objets en orbite supérieurs à 10cm va inexorablement augmenter (du fait des collisions des débris orbitaux plus gros qui créent de nombreux débris de plus petite taille) conduisant à une saturation de l'orbite basse et la rendant ainsi inexploitable pendant des siècles. Ces simulations montrent qu'il suffit de placer en orbite de moins de 25 ans cinq objets par an parmi ceux ayant le plus haut produit « masse x probabilité de collision » pour stabiliser l'environnement en limitant l'augmentation des débris orbitaux.

Il existe donc un réel besoin de désorbiter ou de réorbiter les débris orbitaux, en particulier ceux de taille et/ou de masse importantes (par exemple supérieure à une tonne) en orbite basse et ne comportant pas leur propre système de désorbitation.

Le document XP 002694657, intitulé "Space debris mitigation technlogies" par Rob Hoyt décrit toutes les caractéristiques techniques du préambule de la revendication 1.

La présente invention a notamment pour but de répondre à ce besoin.

Elle propose à cet effet un système ou kit selon la revendication 1 et une méthode selon la revendication 11 ainsi qu'un dispositif de capture et de couplage en vue de la désorbitation ou de la réorbitation d'un objet dans l'espace, comprenant :
- un véhicule spatial comportant des moyens moteurs pour son déplacement dans l'espace,
- un voile souple de capture de l'objet, ce voile étant déployable depuis une position pliée ou rangée jusqu'à une position déployée de réception et de capture de l'objet,
- des moyens de déploiement du voile, ces moyens comprenant au moins un organe gonflable s'étendant sur au moins une partie d'un bord périphérique du voile et destiné à provoquer le déploiement du voile lorsqu'il est gonflé, et
- des moyens de liaison du véhicule au voile et/ou à l'organe, ces moyens permettant d'appliquer une force de traction à l'objet capturé lorsque le véhicule se déplace,
caractérisé en ce que l'organe gonflable est formé par un cadre qui s'étend sensiblement sur tout le pourtour du bord périphérique du voile et est relié à une extrémité d'au moins un mât gonflable dont l'autre extrémité est reliée aux moyens de gonflage.

Dans la présente demande, on entend par :
- désorbitation, le fait de provoquer directement la rentrée de l'objet dans l'atmosphère en vue de sa destruction ou le fait de transférer l'objet sur une autre orbite qui lui permettra de rentrer dans l'atmosphère en moins de 25 ans ;
- réorbitation, le fait de provoquer le transfert de l'objet vers une orbite supérieure (de plus grande altitude), appelée orbite cimetière, qui se situe en général sur une orbite circulaire au-delà de 2000km en orbite basse, la réorbitation est particulièrement intéressante pour les objets à risque, tels que ceux équipés d'un réacteur nucléaire ;
- objet dans l'espace ou orbital, tout objet, naturel ou artificiel, en orbite en particulier autour de la Terre, tel qu'un étage supérieur de lanceur (par exemple un étage H10 du lanceur Ariane 4) ou un satellite (tel que le satellite à panneaux solaires déployables SPOT 3) ; l'objet peut avoir une masse supérieure à une tonne et peut être en orbite basse (altitudes de périgée et d'apogée inférieures ou égales à 1500km et par exemple comprise entre 600 et 1500km pour l'apogée et supérieure à 450km pour le périgée, et inclinaisons par exemple comprises entre 56 et 110°, et de préférence entre 60 et 105°), et
- véhicule spatial, tout engin de l'espace équipé de moyens moteurs aptes à assurer son déplacement dans l'espace, cet engin peut soit être mis en orbite par lancement et commande depuis la Terre, soit mis en orbite par l'intermédiaire d'un autre véhicule spatial, cet autre véhicule pouvant libérer successivement plusieurs véhicules selon l'invention pour la désorbitation ou la réorbitation de plusieurs objets, les moyens moteurs du véhicule sont par exemple des moteurs fusées chimiques ou électriques. Un exemple de moteur utilisable est le moteur principal de l'ATV (*Automated Transfer Vehicle*) R-4D-11 fabriqué par Aerojet.

Selon l'invention, le véhicule est équipé du voile et des moyens de déploiement et est amené au voisinage de l'objet à capturer comme cela sera décrit plus en détail dans ce qui suit. Le voile est déployé par gonflage de l'organe et l'objet est capturé dans le voile. Le déplacement du véhicule entraîne une traction sur l'objet capturé par l'intermédiaire des moyens de liaison, en vue de sa désorbitation ou sa réorbitation.

Le voile souple est de préférence de grandes dimensions de façon à capturer des objets de grandes taille et/ou masse (un étage de lanceur a typiquement une longueur de 10m environ et une masse résiduelle supérieure à 1 tonne).

Le voile peut avoir une forme de poche, et comporter une ouverture par laquelle l'objet à capturer est destiné à passer lors de sa capture, et sur le bord périphérique de laquelle s'étend l'organe gonflable précité.

En variante, le voile a une forme quasi-planaire, c'est-à-dire qu'il est sensiblement plan ou légèrement incurvé, et l'organe gonflable peut s'étendre sur le bord périphérique externe du voile. Dans ce cas, le voile peut être tendu lorsque l'organe précité est gonflé, ce qui est particulièrement avantageux pour le déplacement et le positionnement du voile dans l'espace (du fait de l'absence de partie flottante du voile).

Le voile ou l'ouverture de la poche peut avoir une forme générale circulaire dont le diamètre est supérieur à 10m, et est par exemple de l'ordre de 30m.

Le voile ou la poche est souple et est déployable depuis une position pliée jusqu'à une position déployée, dans laquelle il/elle peut définir un volume de forme générale cylindrique, tronconique, conique, ou en portion de sphère, de profondeur comprise par exemple entre 1 et 300m. Le matériau du voile ou de la poche comprend de préférence un filet, par exemple en Kevlar® ou en Dyneema®, et éventuellement une fine membrane recouvrant ce filet. Dans le cas où le voile est sensiblement plan, la surface du filet peut être choisie pour être à peine supérieure à la section d'ouverture du voile une fois déployée de façon à minimiser la masse du filet et faciliter son pliage et son stockage.

Comme indiqué dans ce qui précède, le voile ou la poche est déployé par gonflage d'un organe s'étendant au moins en partie le long d'un bord périphérique du voile ou de l'ouverture de la poche. Cette étape de gonflage peut être précédée d'une étape de largage des moyens de déploiement afin d'en faciliter le gonflage.

Selon l'invention, l'organe gonflable est formé par un cadre, par exemple annulaire, qui s'étend sensiblement sur tout le pourtour du bord périphérique du voile ou de l'ouverture de la poche et est relié à une extrémité d'au moins un mât gonflable dont l'autre extrémité est reliée aux moyens de gonflage portés le véhicule. Le cadre est de préférence relié aux moyens de gonflage par deux mâts, dont les extrémités opposées aux moyens de gonflage peuvent être reliées à deux zones diamétralement opposées du cadre. Le ou chaque mât peut avoir une longueur comprise entre 10 et 100m, et par exemple entre 30 et 100m.

Lorsqu'ils sont gonflés, les mâts et le cadre peuvent être relativement rigides ce qui permet de les déplacer et de les positionner de façon relativement précise.

Les moyens de gonflage de l'organe comprennent par exemple une source de gaz et des moyens d'alimentation en gaz reliant la source à l'organe et/ou aux mâts. Ils peuvent comprendre un générateur de gaz tel qu'un générateur pyrotechnique, un générateur hybride ou un générateur gaz froids.

Le ou chaque mât gonflable est de préférence désolidarisable du cadre et/ou des moyens de gonflage. Cette désolidarisation est par exemple assurée au moyen d'un dispositif mécanique ou pyrotechnique approprié.

Les moyens de liaison précités peuvent comprendre un ou plusieurs câbles dont une extrémité est fixée au véhicule et dont l'extrémité opposée est fixée à l'organe ou au voile, la partie d'extrémité du câble située du côté du voile s'étendant le long d'au moins une partie du bord de l'ouverture du voile et étant maintenue et guidée en translation le long de ce bord de façon à ce qu'une force de traction appliquée sur le câble dans une direction opposée au voile provoque une fermeture au moins partielle de celui-ci.

Selon l'invention, lorsqu'une force de traction est appliquée sur le câble, dans une direction opposée au voile, le câble coulisse dans des moyens de guidage fixés à l'organe et/ou au voile, ce qui se traduit par un rapprochement du point de fixation du câble au voile et/ou à l'organe des moyens de guidage, et provoque la fermeture au moins partielle du voile. La traction sur le câble peut être provoquée par le déplacement du véhicule et/ou par enroulement du câble par des moyens spécifiques portés par le véhicule et/ou par la rentrée de l'objet dans le voile qui, du fait de la différence entre les vitesses de déplacement de l'objet et du véhicule, peut provoquer une traction du filet dans une direction sensiblement parallèle à celle de déplacement ou dérive de l'objet.

Le câble des moyens de liaison est par exemple réalisé en Dyneema®. Il peut avoir une longueur supérieure à 10m, de préférence supérieure à 50m, plus préférentiellement supérieure à 100m, et par exemple de l'ordre de 150m.

Le dispositif selon l'invention peut en outre comprendre un ou plusieurs des éléments suivants :
- une chambre de stockage des moyens de déploiement et du voile, dans sa position pliée ou rangée, et/ou
- des moyens de détection de la position du voile, et/ou
- des moyens d'enroulement et de déroulement des moyens de liaison.

La présente invention concerne également un système ou kit de capture et de couplage en vue de la désorbitation ou de la réorbitation d'un objet dans l'espace, destiné à équiper un véhicule spatial motorisé, comprenant :
- un voile souple de capture de l'objet, ce voile étant déployable depuis une position pliée ou rangée jusqu'à une position déployée de réception et de capture de l'objet,
- des moyens de déploiement du voile, ces moyens comprenant au moins un organe gonflable s'étendant sur au moins une partie d'un bord périphérique du voile et destiné à provoquer le déploiement du voile lorsqu'il est gonflé,
- des moyens de gonflage de l'organe, et
- des moyens de liaison dont une extrémité est fixée au voile et/ou à l'organe et dont l'extrémité opposée est destinée à être fixée au véhicule, caractérisé en ce que l'organe gonflable est formé par un cadre qui s'étend sensiblement sur tout le pourtour du bord périphérique du voile et est relié à une extrémité d'au moins un mât gonflable dont l'autre extrémité est reliée aux moyens de gonflage.

La présente invention concerne encore un procédé de capture et couplage en vue de la désorbitation ou de la réorbitation d'un objet dans l'espace au moyen du dispositif tel que décrit ci-dessus, caractérisé en ce qu'il comprend les étapes de :
a) mise en orbite du véhicule à une orbite située en dessous ou au dessus de celle de l'objet,
b) gonflage de l'organe et déploiement du voile de sorte que celui-ci soit situé sur l'orbite de l'objet,
c) capture de l'objet dans le voile et dégonflage de l'organe, et
d) déplacement du véhicule et désorbitation ou réorbitation de l'objet par traction du voile et de l'objet par l'intermédiaire des moyens de liaison.

Avantageusement, l'objet est amorti lors de sa capture dans le voile.

Le procédé peut comprendre, avant l'étape c), une étape de dégonflage et de désolidarisation du ou de chaque mât gonflable de l'organe ou des moyens de gonflage.

Les mâts et le cadre peuvent être gonflés de façon simultanée ou séquencée et dégonflés de façon simultanée ou séquencée.

A l'étape c), le dégonflage de l'organe peut avoir lieu simultanément ou préalablement à la capture de l'objet.

A l'étape d), le déplacement du véhicule provoque de préférence la mise en tension du câble des moyens de liaison, ce qui se traduit par la fermeture au moins partielle du voile avant la désorbitation ou réorbitation.

A l'étape d), la réorbitation peut avoir lieu par mise en orbite de l'objet à une orbite supérieure, telle qu'une orbite cimetière, et la désorbitation peut avoir lieu par diminution de l'altitude de l'objet pour provoquer sa rentrée atmosphérique.

L'invention sera mieux comprise et d'autres détails, avantages et caractéristiques de l'invention apparaîtront plus clairement à la lecture de la description suivante faite à titre d'exemple non limitatif et en référence aux dessins annexés dans lesquels :
- la figure 1 est une vue très schématique en perspective du dispositif spatial selon l'invention et comprend une vue partielle à plus grande échelle d'une chambre de stockage d'un voile ou d'une poche de capture d'un objet orbital (en position pliée ou rangée) ;
- la figure 2 est une vue très schématique de face du dispositif de la figure 1, le voile étant en position déployée ;
- la figure 3 est une vue très schématique en perspective du dispositif de la figure 2 et comprend une vue partielle à plus grande échelle du bord périphérique de l'ouverture du voile en position déployée ;
- la figure 4 est une vue très schématique de côté du dispositif de la figure 1, le voile étant fermé et contenant un objet orbital capturé ;
- la figure 5 est une vue très schématique représentant un objet spatial et un dispositif selon l'invention en orbite autour de la Terre ;
- la figure 6 est une vue très schématique d'un objet et du dispositif selon l'invention, sur deux orbites différentes, et représente une étape ou phase d'approche du procédé selon l'invention ;
- la figure 7 est une vue très schématique d'un objet et du dispositif selon l'invention, sur deux orbites différentes, et représente une étape de déploiement du voile du procédé selon l'invention ;
- les figures 8 et 9 sont des vues très schématiques en perspective d'un objet et du dispositif selon l'invention avec son voile déployé, et représentent des étapes de rendez-vous et de capture du procédé selon l'invention ;
- les figures 10 et 11 sont des vues de côté très schématiques d'un objet et du dispositif selon l'invention avec son voile déployé, et représentent également des étapes de rendez-vous et de capture du procédé selon l'invention ;
- les figures 12 et 13 sont des vues de côté très schématiques du dispositif selon l'invention dont le voile est fermé et contient un objet capturé, et représentent des étapes de fermeture du voile et de traction de l'objet capturé en vue de sa désorbitation ou réorbitation ; et
- la figure 14 est un organigramme représentant des étapes du procédé selon l'invention.

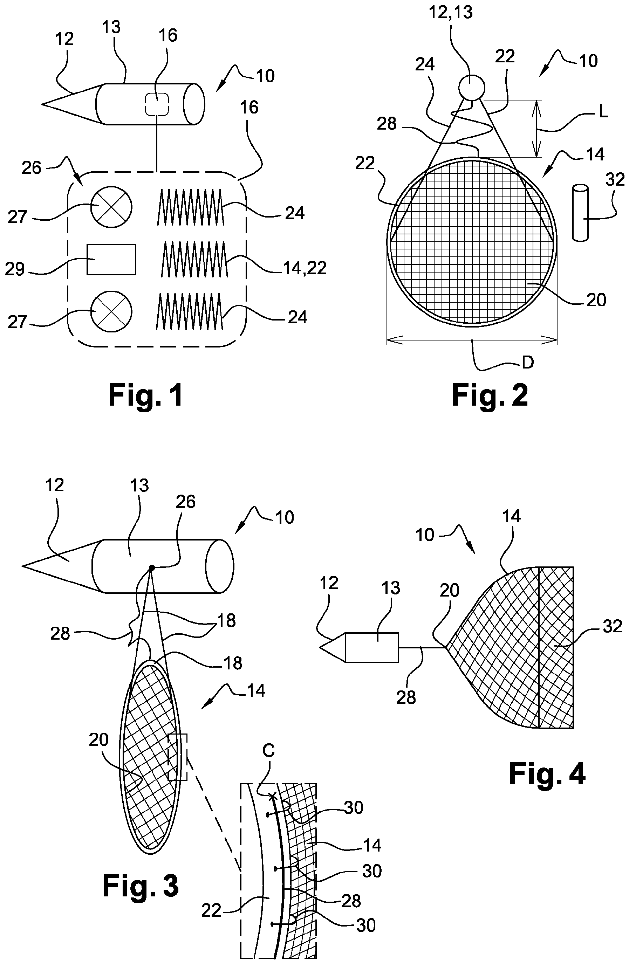

On se réfère d'abord à la figure 1 qui représente un dispositif selon l'invention de capture et couplage en vue de la désorbitation ou de la réorbitation d'un objet dans l'espace, et en particulier d'un débris volumineux en orbite basse autour de la terre.

Le dispositif selon l'invention comprend un véhicule 10 comprenant pour l'essentiel un engin spatial 12 motorisé apte à se déplacer dans l'espace, et un système 13 ou kit pour la capture et la désorbitation/réorbitation de l'objet, ce système pouvant équiper tout type d'engin ou véhicule spatial et étant fixé à celui-ci par des moyens appropriés.

Le système 13 selon l'invention comporte essentiellement trois éléments :
- un voile 14 ou une poche déployable pour la capture de l'objet, ce voile étant dans une position pliée ou rangée en figure 1, à l'intérieur d'une chambre de stockage 16 du système,
- des moyens 18 de déploiement du voile (partiellement visibles en figure 1), le déploiement du voile étant obtenu par gonflage, comme cela sera décrit dans le détail dans ce qui suit, et
- des moyens de liaison (non visibles) du voile au système 13 ou au véhicule 10, qui seront également décrits plus en détail dans ce qui suit.

Le véhicule 10 a typiquement une longueur de l'ordre de 0,5 à 3 m. Il peut être beaucoup plus petit que l'objet à capturer. Il est équipé par exemple d'un ou plusieurs moteurs fusées chimiques ou électriques tel que le moteur R-4D-11 fabriqué par Aerojet qui équipe le véhicule Européen ATV (*Automated Transfer Vehicle*). Le véhicule 10 peut être lancé, mis en orbite et commandé depuis la Terre. En variante, il peut être lancé et mis en orbite depuis un autre véhicule spatial ou une station spatiale, et être commandé à distance depuis ce véhicule ou cette station. Le véhicule 10 peut être dédié à cette opération de capture et de couplage en vue de la désorbitation/réorbitation d'un objet orbital ou peut avoir une ou plusieurs autres fonctions. Il peut également être utilisé pour la capture et le couplage de plusieurs objets orbitaux.

La chambre 16 de stockage du voile, dans sa position pliée ou rangée, peut avoir un volume interne de l'ordre de 0,05 à 0,5 m³.

Les figures 2 et 3 représentent le véhicule 10 avec le voile 14 en position déployée.

Le voile 14 comprend une ouverture 20 de forme sensiblement circulaire dans l'exemple représenté, dont le diamètre D est de l'ordre de 30 à 100m. Quand le voile 14 est entièrement déployé, il peut avoir une forme de poche ou une forme sensiblement plane, comme c'est le cas dans l'exemple représenté.

La forme quasi-planaire du voile permet de minimiser la masse du voile et aussi de faciliter son stockage à l'état plié.

Le voile 14 est relativement fin et est formé par un filet dont les fils sont par exemple en Kevlar® ou en Dynemma® et qui peut être associé ou non à une membrane souple. Le filet est de préférence du type sans nœud.

Dans sa position déployée, le voile 14 est ouvert, et sa section d'ouverture est la plus grande possible c'est-à-dire que le bord périphérique de son ouverture 20 est sensiblement tendu.

Dans un cas particulier de réalisation de l'invention où le voile 14 est destiné à la capture d'un objet sensiblement cylindrique de 10m de hauteur, 2,6m de diamètre, et de 2 tonnes, les fils de son filet ont un diamètre de 1,5mm et le voile a une masse totale de 15kg environ. La surface du filet peut être choisie pour être à peine supérieure à la section d'ouverture du voile une fois déployée de sorte que le voile ait une forme quasi-planaire.

Les moyens 18 de déploiement du voile 14 comprennent un cadre 22 et des mâts 24 gonflables, le cadre 22 s'étendant sur tout le pourtour du bord périphérique de l'ouverture 20 du voile, et les mâts 24 reliant le cadre à des moyens 26 de gonflage par exemple portés par le véhicule 10.

Le cadre 22 est fixé au bord périphérique de l'ouverture 20 du voile 14, par exemple par une sangle cousue. Il est réalisé dans un matériau souple, par exemple en polyéthylène, et comporte une cavité cylindrique interne de forme générale circulaire, qui est sectorisée ou non, et dans laquelle est insufflé un gaz, tel que de l'azote.

Dans l'exemple représenté, les mâts 24 sont coplanaires et ont une de leurs extrémités reliée aux moyens 26 de gonflage et leurs autres extrémités qui sont raccordées à des zones diamétralement opposées du cadre 24. Les mâts 24 sont réalisés dans un matériau souple similaire à celui du cadre 22 (polyéthylène) et comporte chacun une cavité interne qui peut être en communication fluidique avec la cavité interne du cadre.

Le cadre 22 et les mâts 24 servent à la fois au déploiement du voile 14 et à son maintien en forme et en position déployée jusqu'au début de la capture.

Les moyens 26 de gonflage comprennent par exemple une source de gaz reliée à des moyens d'alimentation en gaz des mâts et du cadre, le gaz pouvant être acheminé jusqu'au cadre 22 par l'intermédiaire des mâts 24. Le véhicule 10 peut en outre porter des moyens de dégonflage du cadre et des mâts tels que des clapets mécaniques, pneumatiques ou pyrotechniques.

Dans la figure 1, les moyens 26 de gonflage sont logés dans la chambre 16 et comprennent des gonfleurs 27 (par exemple au nombre de deux pour assurer une redondance) et des équipements annexes 29 tels que par exemple des batteries, un système de contrôle, un ordinateur de bord, des moyens d'enroulement/déroulement, ou tout autre élément nécessaire au bon fonctionnement de l'ensemble. Une extrémité de chaque mât 24 peut être fixée à l'intérieur de la chambre, l'autre extrémité de chaque mât étant reliée au cadre 22.

Lorsque le voile 14 est en position déployée représentée aux figures 2 et 3, la distance minimale L entre le voile 14 ou le cadre 22 et le véhicule 10 peut être supérieure à 10m.

Dans le cas particulier précité, le cadre 22 a un diamètre de 30m environ et une section transversale de 0,1m environ de diamètre, et les mâts 24 ont chacun une longueur de 30m et une section transversale de 0,1m environ de diamètre. Le volume interne total des cavités des mâts et du cadre peut est de l'ordre de 1,2m³. Le cadre et les mâts sont réalisés en film de polyéthylène de 0,5mm d'épaisseur et ont une masse totale de 22kg environ. Le cadre et les mâts peuvent être gonflés avec un gaz (azote) à 1 bar à 15°C, la durée pour leur gonflage étant de l'ordre de 500ms. Le cadre et les mâts peuvent être reliés à un réservoir de gaz de volume de 6,4L et de 200 bars de pression interne, ce réservoir étant équipé d'un détendeur simple ou à plusieurs étages.

Le cadre 22 est relié au véhicule 10 par un ou plusieurs câbles 28, dont une extrémité est fixée au système 13 ou à l'engin 12 et dont l'autre extrémité est fixée au cadre (au point C dans la vue partielle à plus grande échelle de la figure 3). La partie d'extrémité du câble 28 située du côté du voile 14 est enroulée autour d'une partie du cadre 22 et s'étend donc autour d'une partie du bord périphérique de l'ouverture 20 du voile. Cette partie d'extrémité du câble est guidée et coulisse dans des mousquetons 30, des manilles ou analogues portés par le cadre et, qui sont régulièrement répartis sur au moins une partie du pourtour du cadre. Le câble 28 passe dans une série de mousquetons 30 dont le premier est situé au voisinage de l'extrémité du câble fixée au cadre et dont le dernier est situé dans la zone du cadre où la distance L entre le cadre et l'engin est la plus faible.

Le câble 28 peut être réalisé en Dyneema®. La longueur du câble est de préférence supérieure à la distance L précitée de sorte que, lorsque le voile 14 est déployé, le câble 28 n'est pas tendu, comme cela est schématiquement représenté dans les dessins.

Dans l'exemple particulier précité, le câble en Dyneema® a une longueur de 144m, un diamètre de 2mm et a une masse de 0,5kg environ.

Le véhicule 10 peut comprendre des moyens (non représentés) d'enroulement et de déroulement du câble 28 qui peuvent être portés par le système.

Une traction sur le câble 28, dans une direction opposée au voile 14, provoque une traction sur le point (C) de fixation du câble au cadre 22, dans une direction sensiblement coplanaire et tangente au cadre. Lorsque le cadre 22 et les mâts 24 sont au moins en partie dégonflés, une traction sur le câble 28 dans la direction précitée provoque la fermeture du voile par rapprochement du point C et du dernier mousqueton de la série précitée, jusqu'à la fermeture partielle ou totale du voile.

La force de traction appliquée au câble 28 peut être obtenue par déplacement du véhicule 10 au moyen de son moteur, par enroulement du câble et/ou du fait de la capture de l'objet dans le voile.

Dans l'exemple de la figure 4, le voile 14 est complètement fermé et contient un objet orbital 32 qui a été capturé, comme cela sera décrit dans le détail dans ce qui suit. Comme cela est visible dans cette figure, l'objet 32 peut avoir des dimensions et même une masse supérieures à celles de l'engin. Le ou les câbles 28 assurent le lien mécanique avec le véhicule 10 après capture de l'objet 32.

Le ou les câbles 28 sont suffisamment résistants pour transmettre une force de poussée générée par le moteur du véhicule 10 à l'objet et le dévier ainsi de sa trajectoire en vue de sa désorbitation/réorbitation.

Le véhicule 10 selon l'invention peut en outre comprendre des capteurs de détection (non représentés), en particulier des positions du voile 14 (pliée/rangée et déployée), de la pression dans le cadre 22 et les mâts 24, de la présence d'un objet 32 dans le voile, des forces de traction appliquées par le véhicule et le voile, respectivement, sur le câble 28, de la longueur de la partie déroulée du câble 28, etc.

Le système selon l'invention comprenant les moyens 18 de déploiement (mâts et cadre 22), le voile 14 et le câble 28 a une masse totale inférieure à 40kg dans l'exemple particulier précité de réalisation de l'invention. Un véhicule ou engin de taille et de masse relativement faibles, tel que par exemple un véhicule de 400kg environ, pourrait être équipé du système 13 selon l'invention.

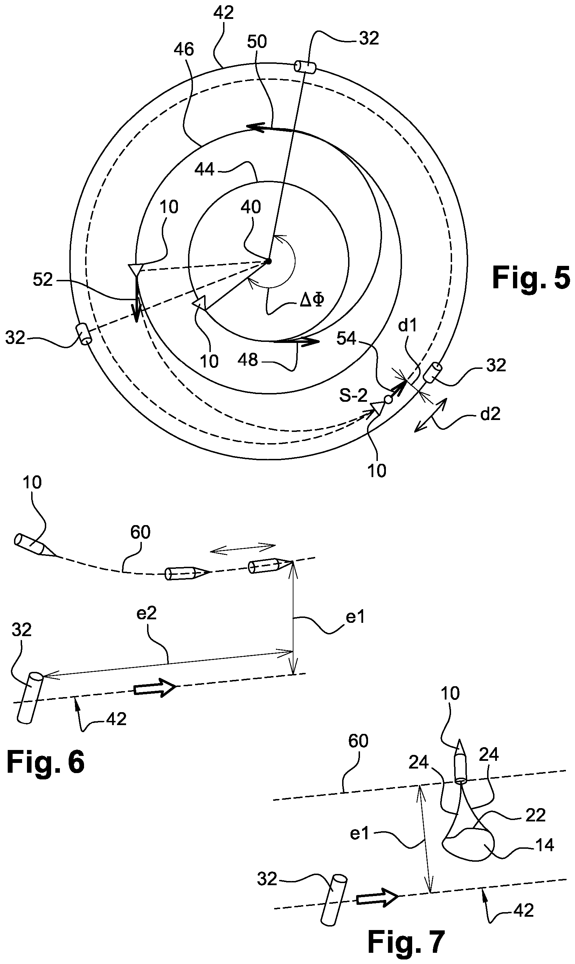

On se réfère désormais à la figure 5 qui représente des étapes ou phases d'approche de l'objet et de rendez-vous avec l'objet du procédé selon l'invention.

Le point 40 désigne la Terre et les cercles 42 et 44 en traits continus représentent respectivement les orbites d'un objet 32 à capturer et à désorbiter/réorbiter et du véhicule 10 selon l'invention. Ces orbites sont de préférence situées dans l'orbite basse terrestre (LEO) et ont des altitudes comprises par exemple entre 600 et 1500km et des inclinaisons voisines de 98° mais l'invention peut être appliquée à toutes les types d'orbites y compris les orbites géostationnaires situées à 36000km (GEO).

Le véhicule 10 est mis en orbite par lancement depuis la Terre ou depuis un véhicule situé sur cette orbite ou sur une autre orbite, par exemple de parking, le véhicule étant destiné à capturer et désorbiter/réorbiter un objet ou plusieurs objets successivement.

A un moment opportun prédéterminé, le véhicule 10 est transféré sur une orbite 46 relativement proche de celle 42 de l'objet à capturer, cette orbite 46 dit de « phasage » étant située au dessus ou en dessous de l'orbite 42 et distante de cette orbite de 10 à 12km environ par exemple. Cette étape est appelée phase d'approche.

Dans le cas où l'inclinaison de l'orbite du véhicule 10 est proche de l'inclinaison de l'orbite de l'objet 32 à capturer, l'écart entre les plans orbitaux du véhicule et de l'objet est principalement dû à la différence des nœuds ascendants. Afin d'effectuer un rendez-vous avec l'objet, il est possible de se rapprocher suffisamment du plan orbital de l'objet et donc de combler l'écart entre les nœuds ascendants véhicule et objet. Un moyen économique d'atteindre le nœud ascendant de l'objet est d'utiliser la dérive du nœud ascendant (ou mouvement de précession du plan orbital). L'homme du métier spécialisé dans le ralliement par un véhicule du plan de l'orbite d'un objet spatial est à même de déterminer les conditions et paramètres de transfert du véhicule jusqu'à l'objet à capturer.

L'étape de rendez-vous peut comprendre trois sous-étapes dites de phasage, de rendez-vous lointain et de rendez-vous proche, respectivement. Le phasage peut comprendre jusqu'à sept manœuvres ou *boosts.* Les deux premières manœuvres 48, 50 ont pour but de positionner le véhicule sur son orbite de phasage 46 et sont de type « transfert de Hohman ». La troisième manœuvre, après contrôle de l'orbite réellement obtenue est censée corriger légèrement l'orbite de phasage, c'est une manœuvre nécessaire mais généralement de faible amplitude. Les quatre manœuvres suivantes sont programmées pour obtenir les conditions de rendez-vous tout en limitant la consommation énergétique du véhicule. Les quatrième et cinquième manœuvres ont pour but de réduire l'excentricité de l'orbite et les sixième et septième manœuvres 52, 54 sont positionnées de façon optimale pour assurer la contrainte de rendez-vous lointain (au point S-2 - les positions respectives du véhicule et de l'objet étant dans un exemple particulier de réalisation de l'invention : écart d1 en altitude -12km, écart longitudinal d2 -148km et écart latéral 0km). L'orbite de phasage 46 est déterminée en fonction du déphasage initial (ΔΦ) et du temps alloué pour rejoindre l'objet. Lorsque le déphasage devient suffisamment faible, on déclenche la manœuvre de rendez-vous en S-2.

Les manœuvres de rendez-vous proche peuvent être décomposées en plusieurs sous manœuvres respectivement de « Pre-Homing » (pour rapprocher le véhicule à 30km (écart longitudinal) de l'objet), de « Homing » (pour amener le véhicule à la même altitude que la cible, à 2,5km de celui-ci), de « Closing » (pour amener le véhicule à environ 300m de l'objet), de transition finale (pour amener le véhicule à quelques mètres de l'objet), et d'arrimage (lors duquel le véhicule parcourt les derniers mètres à vitesse réduite puis s'arrime à l'objet).

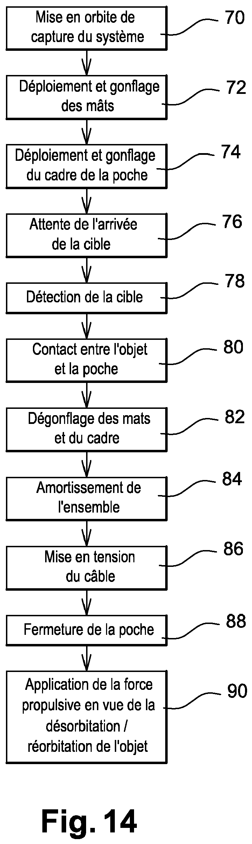

Les figures 6 à 13 illustre un mode de réalisation du procédé selon l'invention, et la figure 14 est un organigramme représentant des étapes du procédé selon l'invention.

La figure 6 représente une étape d'approche et de freinage dans lequel le véhicule 10 est transféré sur une orbite 60 distant de l'orbite 42 de l'objet 32 à capturer, l'altitude de l'orbite 60 étant supérieure à celle de l'objet (étape 70 de la figure 14). L'écart d'altitude (e1 - qui est par exemple de l'ordre de 10m) est notamment déterminé en fonction des dimensions du voile et de ses moyens de déploiement, comme cela sera décrit dans ce qui suit.

L'objet 32 qui est sur une orbite 42 inférieure se déplace plus vite que le véhicule 60. L'écart longitudinal e2 est notamment déterminé en fonction de la différence de vitesses entre ces éléments et de la durée de déploiement et de positionnement du voile. Le véhicule maintient son altitude et réduit sa vitesse tangentielle.

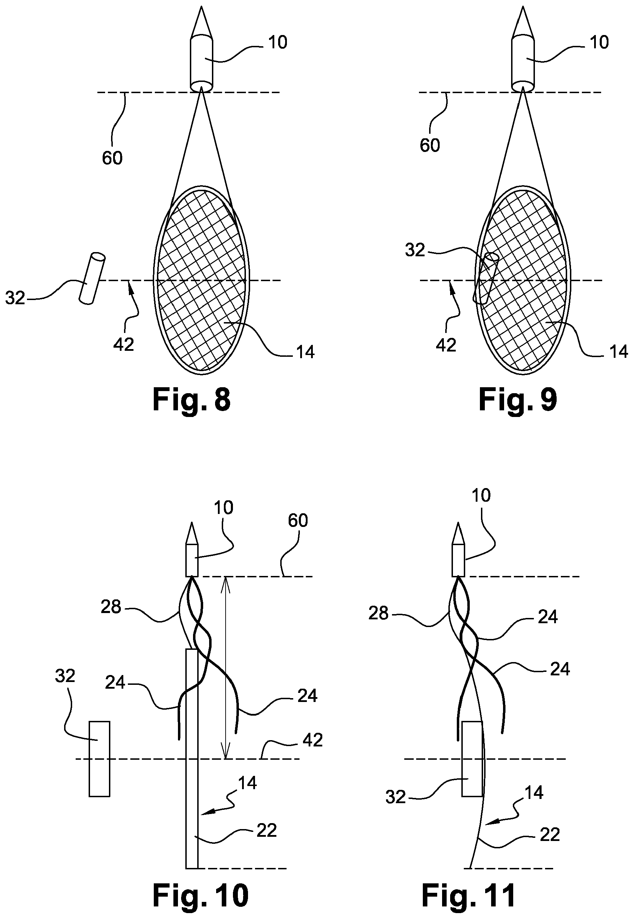

La figure 7 représente une étape de déploiement du voile 14 dans laquelle les moyens de gonflage alimentent en gaz les mâts 24 et le cadre 22 qui se gonflent, ce qui provoque le déploiement et l'ouverture du voile (étapes 72 et 74 de la figure 14). Le véhicule 10 est positionné de sorte que le voile déployé soit situé sur l'orbite 42 de l'objet 32, comme cela est représenté en figure 8. Le fait de positionner le véhicule sur une orbite supérieure lui permet d'exercer une force de traction sur les mâts une fois déployés. Cette position est maintenue jusqu'à ce que l'objet pénètre dans le voile 14, comme représenté en figure 9 (étape 76 de la figure 14).

Comme indiqué dans ce qui précède, pour limiter la détérioration du voile 14 par l'objet 32 à capturer et pour éviter que le véhicule 10 soit entraîné par l'objet lors de la capture, les moyens de déploiement 18 (22, 24) sont dégonflés préalablement ou simultanément à la capture, et les mâts 24 sont désolidarisés du cadre 22, comme cela est schématiquement représentés aux figures 10 et 11.

En figure 10, juste avant la pénétration de l'objet 32 dans le voile 14 (e2 de l'ordre de 10m environ - ce qui représente un temps de 5s avant la capture), les extrémités des mâts 24 opposées au véhicule 10 sont désolidarisées du cadre 22. Cela peut être rendu possible par un capteur (du type télémètre par exemple) de détection de l'objet en entrée du voile (étapes 78 et 80 de la figure 14).

Le dégonflage du cadre 22 et des mâts est déclenché (environ quelques secondes avant la capture) de façon à ce que le cadre reste en forme mais perde sa rigidité au moment du contact (étape 82 de la figure 14). Le dégonflage du cadre modifie peu la trajectoire du voile qui peut capturer l'objet (l'accélération parasite peut conduire à un petit déplacement radial du cadre qui peut être considérée comme négligeable comparé aux dimensions de l'ensemble). Lors de la capture (figure 11), l'objet déforme le voile et a tendance à l'entraîner avec lui (étape 84 de la figure 14). Le véhicule 10 n'est pas entraîné par le voile du fait de la dissociation des mâts du cadre ainsi que de la longueur du ou des câbles 28 supérieures à la distance minimale entre le cadre et le véhicule. Il n'y a pas de transmission de forces entre le véhicule 10 et l'objet 32 tant que le câble 28 n'est pas tendu.

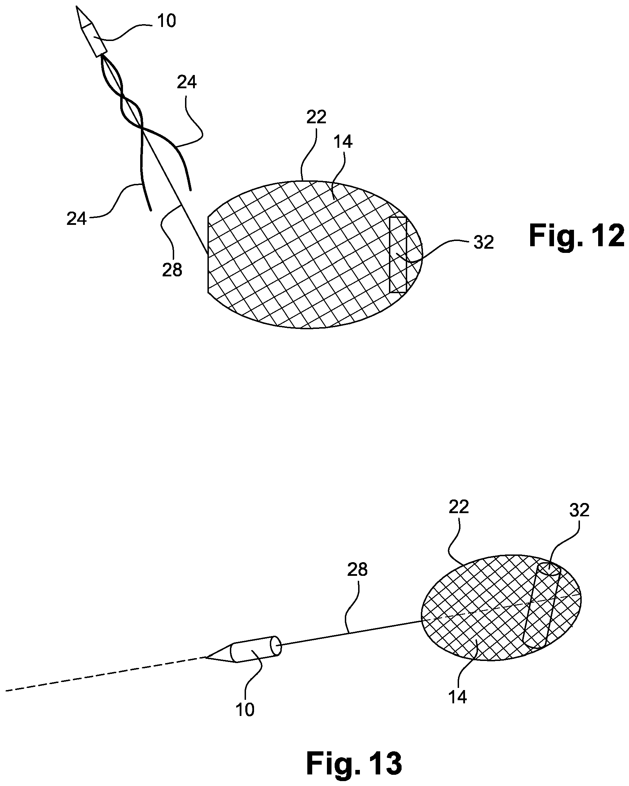

L'objet 32 qui se déplace relativement au véhicule 10 va entraîner avec lui le voile, ce qui va provoquer la mise en tension du ou des câbles 28 (étape 86 de la figure 14). La partie d'extrémité s'étendant autour du cadre 22 va coulisser dans les mousquetons précités et provoquer le rapprochement de ces mousquetons et la fermeture du voile qui forme ainsi une poche, comme représenté en figure 12 (étape 88 de la figure 14). Dans l'exemple précité, lorsqu'il est tendu, le câble a une longueur correspondant sensiblement à la longueur de câble initialement enroulée autour du cadre 22 (c'est-à-dire au périmètre du cadre) et à la distance minimale initiale entre le cadre et le véhicule, soit 105m environ au total. L'objet 32 ne peut pas sortir du voile fermé et entraîne le véhicule avec lui. Le seul effort subi par le voile est la tension du câble qui peut être aisément maîtrisable avec des moyens d'enroulement à ressort.

Le véhicule 10 contrôle ensuite son altitude pour se placer en direction opposée à l'orbite de l'objet 32 (figure 13), puis se déplace avec un ΔV nécessaire pour transférer l'objet vers une orbite cimetière (réorbitation), vers une orbite de moins de 25 ans ou vers la Terre (désorbitation - étape 90 de la figure 14).

Après transfert, le véhicule 10 peut être soit destiné à rester arrimé à l'objet soit destiné à se désarrimer de l'objet puis à venir sur une orbite de phasage en vue de la désorbitation/réorbitation d'un autre objet ; le système ou kit de désorbitation/réorbitation restant solidaire de l'objet à désorbiter.

Dans le cas particulier précité de réalisation de l'invention et pour un véhicule 10 de masse initiale de 5 tonnes et dont le moteur a une poussée de 400N, une simulation a été effectuée pour déterminer la durée et le coût d'une désorbitation d'un étage de lanceur Ariane 4 dont l'orbite 42 a les paramètres suivants : inclinaison 98,66°, apogée 779km et périgée 762km, à partir d'un véhicule 10 en orbite initiale 44 avec les paramètres: inclinaison 98,66°, apogée 600km et périgée 600km. La durée totale des manœuvres est de l'ordre de 3-4 jours et le budget à prévoir en termes de ΔV pour le rendez-vous est de 120 m/s environ (ΔV étant l'incrément de vitesse à fournir au véhicule pour mener à bien l'opération).

## Revendications

1. Système (12) ou kit de capture et de couplage en vue de la désorbitation ou de la réorbitation d'un objet (32) dans l'espace, destiné à équiper un véhicule spatial (10) motorisé, comprenant :
- un voile (14) souple de capture de l'objet, ce voile étant déployable depuis une position pliée ou rangée jusqu'à une position déployée de réception et de capture de l'objet,
- des moyens (18) de déploiement du voile, ces moyens comprenant au moins un organe gonflable s'étendant sur au moins une partie d'un bord périphérique du voile et destiné à provoquer le déploiement du voile lorsqu'il est gonflé, l'organe gonflable étant relié à des moyens de gonflage (26), et
- des moyens de liaison du véhicule (10) au voile (14) et/ou à l'organe gonflable, ces moyens permettant d'appliquer une force de traction à l'objet capturé lorsque le véhicule se déplace,
**caractérisé en ce que** l'organe gonflable est formé par un cadre (22) qui s'étend sensiblement sur tout le pourtour du bord périphérique du voile (14) et est relié à une extrémité d'au moins un mât (24) gonflable dont l'autre extrémité est reliée aux moyens de gonflage (26).

2. Système ou kit selon la revendication 1, **caractérisé en ce que** le matériau du voile (14) comprend un filet, par exemple en Kevlar® ou en Dyneema®, et éventuellement une fine membrane recouvrant ce filet.

3. Système ou kit selon la revendication 1 ou 2, **caractérisé en ce que** le voile :
- a une forme de poche, et comporte une ouverture (20) par laquelle l'objet à capturer est destiné à passer lors de sa capture, et sur le bord périphérique de laquelle s'étend l'organe gonflable, ou
- est sensiblement plan.

4. Système ou kit selon la revendication 3, **caractérisé en ce que** le voile (14) ou son ouverture (20) a une forme générale circulaire dont le diamètre est supérieur à 10m, et est par exemple de l'ordre de 30m.

5. Système ou kit selon l'une des revendications 1 à 4, **caractérisé en ce que** le ou chaque mât (24) gonflable est désolidarisable du cadre (22) et/ou des moyens de gonflage (26).

6. Système ou kit selon l'une des revendications précédentes, **caractérisé en ce que** les moyens de liaison comprennent un ou plusieurs câbles (28) dont une extrémité est fixable au véhicule (10) et dont l'extrémité opposée est fixée à l'organe gonflable ou au voile (14), la partie d'extrémité du câble située du côté du voile s'étendant le long d'au moins une partie du bord périphérique du voile et étant maintenue et guidée en translation le long de ce bord de façon à ce qu'une force de traction appliquée sur le câble dans une direction opposée au voile provoque une fermeture au moins partielle de celui-ci.

7. Système ou kit selon la revendication 6, **caractérisé en ce que** le câble (28) a une longueur supérieure à 10m, de préférence supérieure à 50m, et plus préférentiellement supérieure à 100m.

8. Système ou kit selon l'une des revendications précédentes, **caractérisé en ce qu'**il comprend :
- une chambre (16) de stockage des moyens de déploiement (18) et du voile (14), dans sa position pliée ou rangée, et/ou
- des moyens de détection de la position du voile, et/ou
- des moyens d'enroulement et de déroulement des moyens de liaison.

9. Dispositif de capture et de couplage en vue de la désorbitation ou de la réorbitation d'au moins un objet (32) dans l'espace, un véhicule spatial (10) comportant des moyens moteurs pour son déplacement dans l'espace, comprenant un système ou kit selon l'une des revendications précédentes.

10. Procédé de capture et de couplage en vue de la désorbitation ou de la réorbitation d'un objet dans l'espace, comprenant l'utilisation d'un dispositif selon la revendication précédente et les étapes de :
a) mise en orbite du véhicule à une orbite située en dessous ou au-dessus de celle de l'objet (32),
b) gonflage de l'organe gonflable et déploiement du voile (14) de sorte que celui-ci soit situé sur l'orbite de l'objet,
c) capture de l'objet dans le voile et dégonflage de l'organe gonflable, et
d) déplacement du véhicule et désorbitation ou réorbitation de l'objet par traction du voile et de l'objet par l'intermédiaire des moyens de liaison (28).

11. Procédé selon la revendication 10, **caractérisé en ce qu'**il comprend, avant l'étape c), une étape de dégonflage et de désolidarisation du ou de chaque mât (24) gonflable de l'organe gonflable ou des moyens de gonflage (26).

12. Procédé selon la revendication 10 ou 11, **caractérisé en ce que**, à l'étape c), le dégonflage de l'organe gonflable a lieu simultanément ou préalablement à la capture de l'objet (32).

13. Procédé selon l'une des revendications 10 à 12, comprenant l'utilisation d'un système selon l'une des revendications 6 ou 7, **caractérisé en ce que** , à l'étape d), le déplacement du véhicule provoque la mise en tension du câble (28) des moyens de liaison, ce qui se traduit par la fermeture au moins partielle du voile (14) avant la désorbitation ou réorbitation.

## Patentansprüche

1. System (12) oder Set zum Fangen und zum Koppeln eines Objekts (32) im Weltraum im Hinblick auf das Herausbringen aus der Umlaufbahn oder das Verbringen in eine andere Umlaufbahn, das dazu bestimmt ist, ein motorisiertes Raumfahrzeug (10) auszurüsten, umfassend:
- ein nachgiebiges Segel (14) zum Fangen des Objekts, wobei dieses Segel von einer zusammengefalteten oder verstauten Stellung bis zu einer entfalteten Stellung zum Aufnehmen und zum Fangen des Objekts entfaltet werden kann,
- Mittel (18) zum Entfalten des Segels, wobei diese Mittel mindestens ein aufblasbares Organ umfassen, das sich auf mindestens einem Stück eines Umfangsrandes des Segels erstreckt und dazu bestimmt ist, das Entfalten des Segels zu bewirken, wenn es aufgeblasen wird, wobei das aufblasbare Organ mit Aufblasmitteln (26) verbunden ist, und
- Mittel zum Verbinden des Fahrzeugs (10) mit dem Segel (14) und/oder dem aufblasbaren Organ, wobei diese Mittel ermöglichen, eine Zugkraft auf das gefangene Objekt aufzubringen, wenn sich das Fahrzeug bewegt,
**dadurch gekennzeichnet, dass** das aufblasbare Organ von einem Rahmen (22) gebildet wird, der sich im Wesentlichen auf dem gesamten Umkreis des Umfangsrandes des Segels (14) erstreckt und mit einem Ende mindestens eines aufblasbaren Masts (24) verbunden ist, dessen anderes Ende mit den Aufblasmitteln (26) verbunden ist.

2. System oder Set nach Anspruch 1, **dadurch gekennzeichnet, dass** das Material des Segels (14) ein Netz umfasst, zum Beispiel aus Kevlar® oder aus Dyneema®, und gegebenenfalls eine feine Membran, die dieses Netz bedeckt.

3. System oder Set nach Anspruch 1 oder 2, **dadurch gekennzeichnet, dass** das Segel:
- eine Taschenform aufweist und eine Öffnung (20) umfasst, durch die das zu fangende Objekt bestimmt ist, bei seinem Fangen hindurchzutreten, und an deren Umfangsrand sich das aufblasbare Organ erstreckt, oder
- im Wesentlichen eben ist.

4. System oder Set nach Anspruch 3, **dadurch gekennzeichnet, dass** das Segel (14) oder seine Öffnung (20) eine allgemein kreisrunde Form aufweist, deren Durchmesser mehr als 10 m beträgt und zum Beispiel in der Größenordnung von 30 m liegt.

5. System oder Set nach einem der Ansprüche 1 bis 4, **dadurch gekennzeichnet, dass** der oder jeder aufblasbare Mast (24) vom Rahmen (22) und/oder den Aufblasmitteln (26) gelöst werden kann.

6. System oder Set nach einem der vorstehenden Ansprüche, **dadurch gekennzeichnet, dass** die Verbindungsmittel ein oder mehrere Kabel (28) umfassen, von denen ein Ende am Fahrzeug (10) befestigt werden kann, und von denen das entgegengesetzte Ende am aufblasbaren Organ oder am Segel (14) befestigt ist, wobei sich das auf der Seite des Segels liegende Endstück des Kabels entlang mindestens eines Stücks des Umfangsrandes des Segels erstreckt und entlang dieses Randes gehalten und translatorisch geführt wird, sodass eine Zugkraft, die in eine Richtung auf das Kabel aufgebracht wird, welche dem Segel entgegengesetzt ist, ein mindestens teilweises Schließen desselben bewirkt.

7. System oder Set nach Anspruch 6, **dadurch gekennzeichnet, dass** das Kabel (28) eine Länge von mehr als 10 m, vorzugsweise mehr als 50 m, und stärker bevorzugt mehr als 100 m aufweist.

8. System oder Set nach einem der vorstehenden Ansprüche, **dadurch gekennzeichnet, dass** es umfasst:
- eine Kammer (16) zum Aufbewahren der Entfaltungsmittel (18) und des Segels (14) in seiner zusammengefalteten oder verstauten Stellung, und/oder
- Mittel zum Erfassen der Stellung des Segels, und/oder
- Mittel zum Abwickeln und zum Aufwickeln der Verbindungsmittel.

9. Vorrichtung zum Fangen und zum Koppeln mindestens eines Objekts (32) im Weltraum im Hinblick auf das Herausbringen aus der Umlaufbahn oder das Verbringen in eine andere Umlaufbahn, wobei ein Raumfahrzeug (10) Motormittel für seine Bewegung im Weltraum umfasst, umfassend ein System oder Set nach einem der vorstehenden Ansprüche.

10. Verfahren zum Fangen und zum Koppeln eines Objekts im Weltraum im Hinblick auf das Herausbringen aus der Umlaufbahn oder das Verbringen in eine andere Umlaufbahn, das die Verwendung einer Vorrichtung nach dem vorstehenden Anspruch und die Schritte umfasst des:
a) Inumlaufbahnbringens des Fahrzeugs auf einer Umlaufbahn, die unter oder über derjenigen des Objekts (32) liegt,
b) Aufblasens des aufblasbaren Organs und Entfaltens des Segels (14), sodass dasselbe auf der Umlaufbahn des Objekts liegt,
c) Fangens des Objekts im Segel und Abblasens des aufblasbaren Organs, und
d) Bewegens des Fahrzeugs und Herausbringens des Objekts aus der Umlaufbahn oder Verbringen desselben in eine andere Umlaufbahn durch Ziehen des Segels und des Objekts mittels der Verbindungsmittel (28).

11. Verfahren nach Anspruch 10, **dadurch gekennzeichnet, dass** es vor dem Schritt c) einen Schritt des Abblasens und des Lösens des oder jedes aufblasbaren Masts (24) vom aufblasbaren Organ oder den Aufblasmitteln (26) umfasst.

12. Verfahren nach Anspruch 10 oder 11, **dadurch gekennzeichnet, dass** im Schritt c) das Abblasen des aufblasbaren Organs gleichzeitig mit oder vor dem Fangen des Objekts (32) erfolgt.

13. Verfahren nach einem der Ansprüche 10 bis 12, das die Verwendung eines Systems nach einem der Ansprüche 6 oder 7 umfasst, **dadurch gekennzeichnet, dass** im Schritt d) die Bewegung des Fahrzeugs das Spannen des Kabels (28) der Verbindungsmittel bewirkt, was sich im mindestens teilweisen Schließen des Segels (14) vor dem Herausbringen aus der Umlaufbahn oder Verbringen in eine andere Umlaufbahn auswirkt.

## Claims

1. System (12) or kit for capturing and coupling in view of de-orbiting or re-orbiting an object (32) in space, intended to equip a motorised space vehicle (10), comprising:
- a flexible wall (14) for capturing the object, this wall being deployable from a folded or stored position to a deployed position for receiving and capturing the object,
- means (18) for deploying the wall, these means comprising at least one inflatable member extending over at least one portion of the peripheral edge of the wall and intended to lead to the deployment of the wall when it is inflated, the inflatable member being connected to inflation means (26), and
- means for connecting the vehicle (10) to the wall (14) and/or to the inflatable member, these means making it possible to apply a traction force to the captured object when the vehicle moves,
**characterised in that** the inflatable member is formed by a frame (22) which extends substantially over the whole perimeter of the peripheral edge of the wall (14) and is connected to an end of at least one inflatable mast (24) of which the other end is connected to the inflation means (26).

2. System or kit according to claim 1, **characterised in that** the material of the wall (14) comprises a net, for example made of Kevlar® or Dyneema®, and possibly a thin membrane covering this net.

3. System or kit according to claim 1 or 2, **characterised in that** the wall:
- has a pocket shape, and comprises an opening (20) by which the object to be captured is intended to pass during the capture thereof, and over the peripheral edge of which extends the inflation member, or
- is substantially flat.

4. System or kit according to claim 3, **characterised in that** the wall (14) or the opening (20) thereof has a general circular shape, of which the diameter is greater than 10m, and is for example, around 30m.

5. System or kit according to one of claims 1 to 4, **characterised in that** the or each inflatable mast (24) can be disconnected from the frame (22) and/or the inflation means (26).

6. System or kit according to one of the preceding claims, **characterised in that** the connecting means comprise one or more cables (28), of which one end can be fixed to the vehicle (10), and of which the opposite end is fixed to the inflatable member or to the wall (14), the end portion of the cable located on the side of the wall extending along at least one portion of the peripheral edge of the wall and being maintained and guided in translation along this edge such that a traction force applied on the cable in a direction opposite the wall leads to an at least partial closing of it.

7. System or kit according to claim 6, **characterised in that** the cable (28) has a length greater than 10m, preferably greater than 50m, and more preferably greater than 100m.

8. System or kit according to one of the preceding claims, **characterised in that** it comprises:
- a chamber (16) for storing deployment means (18) and the wall (14), in the folded or stored position thereof, and/or
- means for detecting the position of the wall, and/or
- means for winding and unwinding the connecting means.

9. Capturing and coupling device in view of de-orbiting or re-orbiting at least one object (32) in space, a space vehicle (10) comprising motor means for the movement thereof in space, comprising a system or kit according to one of the preceding claims.

10. Capturing and coupling method in view of de-orbiting or re-orbiting an object in space, comprising the use of a device according to the preceding claim and steps of:
a) orbiting the vehicle at an orbit located below or above that of the object (32),
b) inflating the inflatable member and deploying the wall (14) such that it is located over the orbit of the object,
c) capturing the object in the wall and deflating the inflatable member, and
d) moving the vehicle and de-orbiting or re-orbiting the object by traction of the wall and of the object by way of connecting means (28).

11. Method according to claim 10, **characterised in that** it comprises, before step c), a step of deflating and disconnecting the or each inflatable mast (24) of the inflatable member or inflation means (26).

12. Method according to claim 10 or 11, **characterised in that**, in step c), the deflating of the inflatable member occurs simultaneously or prior to capturing the object (32).

13. Method according to one of claims 10 to 12, comprising the use of a system according to one of claims 6 or 7, **characterised in that**, in step d), the movement of the vehicle leads to the tensioning of the cable (28) of the connecting means, which is conveyed by the at least partial closing of the wall (14) before de-orbiting or re-orbiting.
